# EUROPÄISCHE PATENTANMELDUNG

(11) **EP 0 923 244 A2**
(43) Veröffentlichungstag der Anmeldung: **16.06.1999**
(21) Anmeldenummer: 98440265.1
(22) Anmeldetag: 20.11.1998
(51) Int. Cl.: H04N 7/14

(54) **Zwischenverstärker für ein Kommunikationsnetz zum Empfang und zur Weiterleitung von Frequenzmultiplexsignalen**

(30) Priorität: 10.12.1997 DE 19754785
(71) Anmelder: ALCATEL, 75008 Paris (FR)
(72) Erfinder: Grammel, Gert, 73066 Uhingen (DE)
(74) Vertreter: Menzietti, Domenico, Dipl.-Ing

(57) **Zusammenfassung**

Es ist eine Aufgabe der Erfindung, einen Zwischenverstärker zu schaffen, der auch bei einem Stromausfall den mit ihm verbundenen Endstellen zumindest ein Mindestmaß an Informationen zur Verfügung stellen kann. Der erfindungsgemäße Zwischenverstärker hat einenbreitbandigen Verstärker ( AMP ) zur Verstärkung der empfangenen breitbandigen Signale und zur anschließenden Weiterleitung der verstärkten breitbandigen Signale sowie ein erstes Mittel ( HP1, LP1; S1, LP, C1), das dem breitbandigen Verstärker ( AMP ) vorgeschaltet ist und geeignet ist, die empfangenen schmalbandigen Signale von den empfangenen breitbandigen Signalen frequenzmäßig zu trennen und unter Umgehung des breitbandigen Verstärkers ( AMP ) unverstärkt weiterzuleiten. Damit ist auch während einer Störung die Übertragung der schmalbandigen Signale gewährleistet.

## Beschreibung

Die Erfindung bezieht sich auf einen Zwischenverstärker für ein Kommunikationsnetz zum Empfang und zur Weiterleitung von Frequenzmultiplexsignalen gemäß dem Oberbegriff des Patentanspruchs 1.

Frequenzmultiplexsignale sind beispielsweise aus breitbandigen und schmalbandigen Signalen zusammengesetzt. Die breitbandigen und die schmalbandigen Signale werden in der Regel in verschiedenen Frequenzbereichen übertragen.

In Kommunikationsnetzen, wie beispielsweise aus US 5,343,240 bekannt, werden sowohl breitbandige Signale, z.B. Verteilsignale, zB Kabelfernsehsignale, als auch schmalbandige Signale, z.B. bidirektionale Signale, zB Kabeltelefonie, über eine gemeinsame Leitung übertragen. Die Verteilsignale und die bidirektionalen Signale sind frequenzmäßig voneinander getrennt, so daß sie im Empfänger durch passive Filter, zB ein Hochpaßfilter für Kabelfernsehsignale und ein Tiefpaßfilter für Kabeltelefonie, getrennt und zB einem Fernseher bzw. einem Telefonmodem zuführbar sind. Auf der Übertragungsstrecke werden die Verteilsignale und die bidirektionalen Signale in bidirektionalen Zwischenverstärkern verstärkt. Fällt ein Zwischenverstärker aus, zB aufgrund eines Stromausfalls, so können eine Vielzahl von Endstellen weder Kabelfernsehsignale empfangen noch telefonieren.

Es ist daher eine Aufgabe der Erfindung, einen Zwischenverstärker zu schaffen, der auch bei einem Stromausfall oder einem Ausfall des verstärkenden Elements den mit ihm verbundenen Endstellen zumindest ein Mindestmaß an Informationen zur Verfügung stellen kann.

Erfindungsgemäß wird diese Aufgabe durch einen Zwischenverstärker gemäß Patentanspruch 1 gelöst.

Der erfindungsgemäße Zwischenverstärker zeichnet sich insbesondere dadurch aus, daß er ein Mittel beinhaltet, daß eine frequenzmäßige Trennung der empfangenen Frequenzmultipexsignale in breitbandige und schmalbandige Signale durchführen kann, wodurch insbesondere beim Ausfall der Stromversorgung des Zwischenverstärkers oder bei Auftreten einer Betriebsstörung des Zwischenverstärkers, eine Weiterleitung zumindest eines Teils der empfangenen Signale, nämlich die schmalbandigen Signale, an die nicht so hohe Qualitätsanforderungen gestellt sind, wie an die breitbandigen Signale, ermöglicht wird.

Schmalbandige Signale werden in der Regel mit einem bekannten Modulationsverfahren moduliert, das robuster gegen Störungen ist, als das Modulationsverfahren, das für die breitbandigen Signale verwendet wird. Bei einem Ausfall eines erfindungsgemäßen Zwischenverstärkers werden die schmalbandigen Signale, falls erforderlich, von der Signalquelle mit einem verstärkten Sendepegel ausgesandt, um die Strecke bis zum nächsten Zwischenverstärker ohne wesentliche Dämpfungsverluste zu überbrücken. Wesentlich bei der Erfindung ist also, daß z.B. eine Telefonverbindung auch während eines Ausfalls eines Zwischenverstärkers aufgebaut und aufrechterhalten werden kann.

Bei einer bevorzugten Ausführungsform der Erfindung kann ein unidirektionaler Verstärker anstelle eines bidirektionalen verwendet werden. Dies senkt sowohl die Anschaffungs- als auch die Betriebskosten.

Bei einer weiteren Ausführungsform ist durch die ausschließliche Verstärkung der breitbandigen Signale die zu verstärkende Bandbreite geringer, was in eine Kostenersparnis bei der Herstellung des Verstärkers resultiert, da die Linearitätsanforderungen an den Verstärker dadurch reduziert werden können.

Im folgenden wird die Erfindung anhand von Ausführungsbeispielen unter Zuhilfenahme von Figuren erläutert. Es zeigen :
- Fig. 1: eine schematische Darstellung einer ersten Ausführung eines erfindungsgemäßen Zwischenverstärkers,
- Fig. 2: eine schematische Darstellung einer zweiten Ausführung eines erfindungsgemäßen Zwischenverstärkers,
- Fig. 3: eine schematische Darstellung einer dritten Ausführung eines erfindungsgemäßen Zwischenverstärkers,
- Fig. 4: eine schematische Darstellung einer vierten Ausführung eines erfindungsgemäßen Zwischenverstärkers,
- Fig. 5: eine schematische Darstellung einer fünften Ausführung eines erfindungsgemäßen Zwischenverstärkers,
- Fig. 6: eine schematische Darstellung einer sechsten Ausführung eines erfindungsgemäßen Zwischenverstärkers und

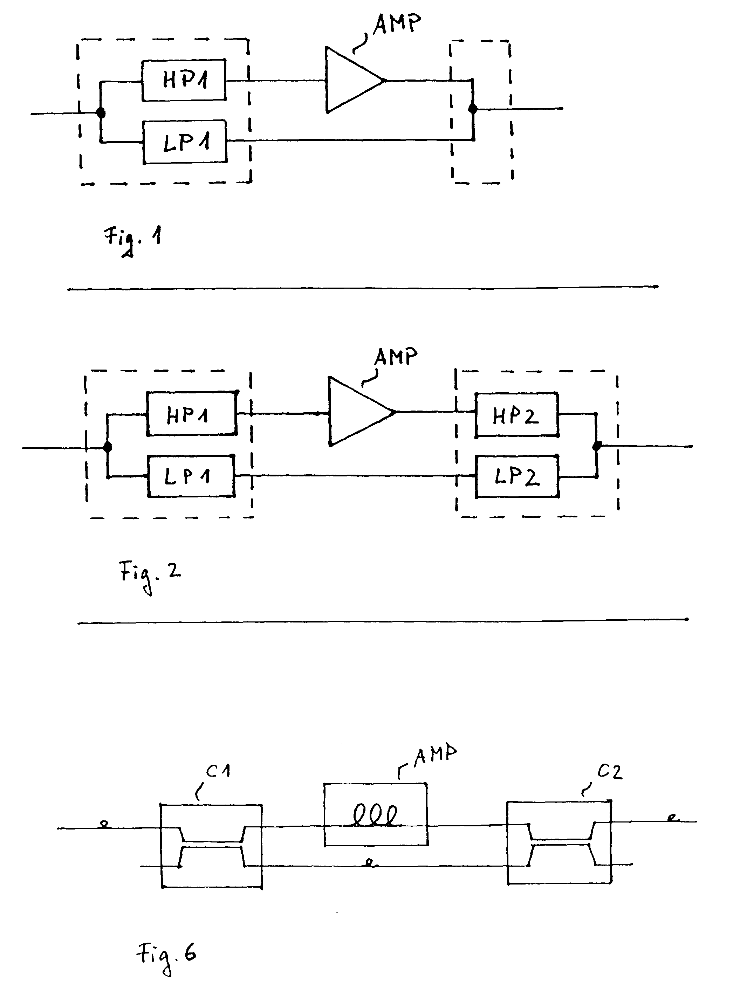

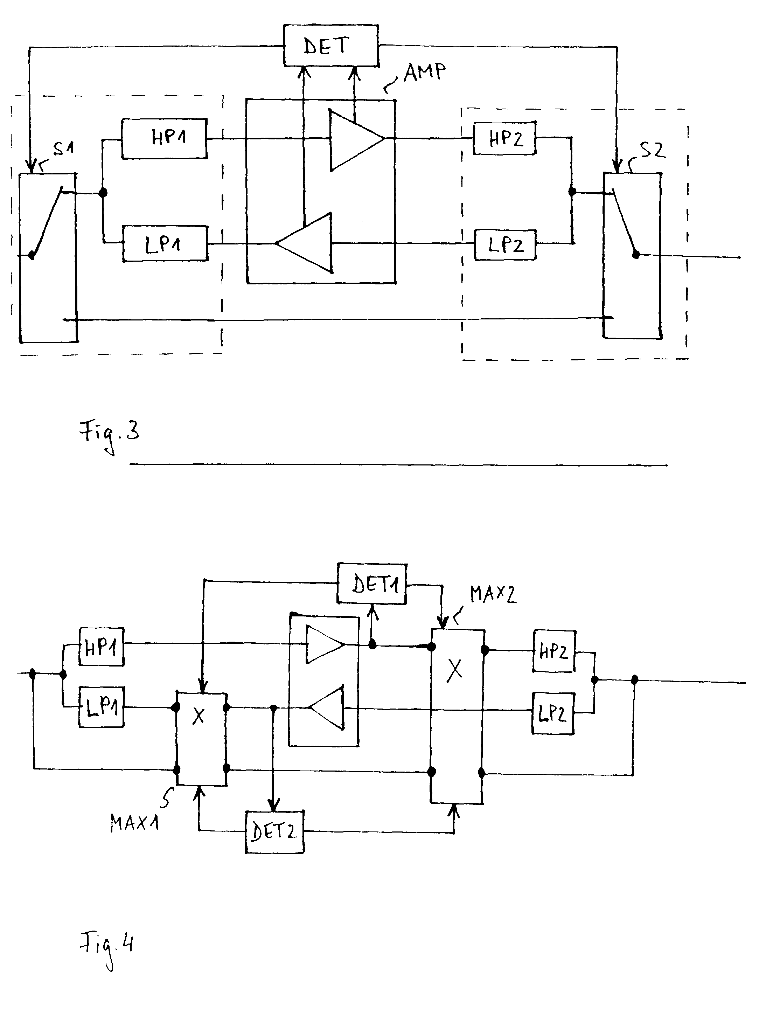

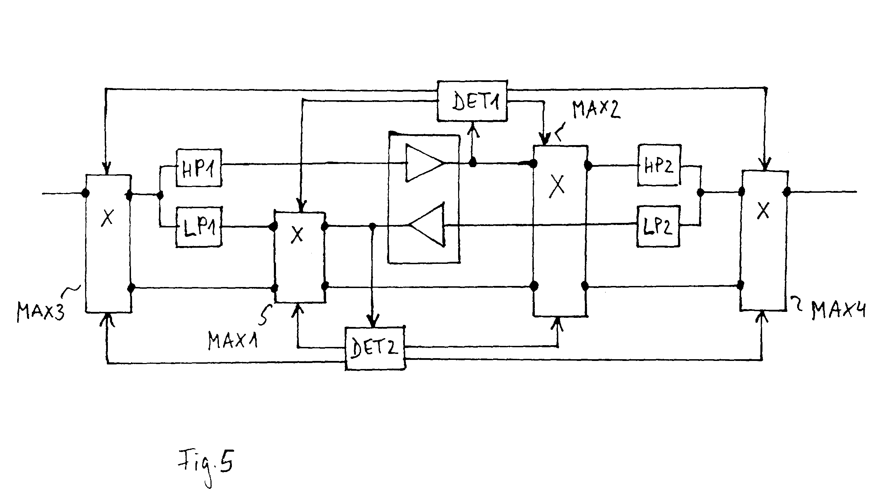

Das erste Ausführungsbeispiel wird nun unter Zuhilfenahme von Fig. 1 erläutert. Fig. 1 zeigt einen Zwischenverstärker für ein Kommunikationsnetz zum Empfang und zur Weiterleitung von Frequenzmultiplexsignalen aus breitbandigen Signalen und schmalbandigen Signalen, mit einem breitbandigen Verstärker AMP zur Verstärkung der empfangenen breitbandigen Signale und zur anschließenden Weiterleitung der verstärkten breitbandigen Signale.

Im Kommunikationsnetz werden elektrische Frequenzmultiplexsignale von einer Sendeeinheit aus über eine Übertragungsstrecke aus Koaxialkabelleitungen und mehreren in Reihe geschalteten Zwischenverstärkern zu einer Vielzahl von Endstellen übertragen.

Die elektrischen Frequenzmultiplexsignale beinhalten als breitbandige Signale beispielsweise Kabelfernsehsignale und als schmalbandige Signale beispielsweise Kabeltelefonsignale. Über ein und dasselbe Koaxialkabel werden somit sowohl unidirektionale Verteilsignale, die Kabelfernsehsignale, von der Sendeeeinheit zu den Endstellen übertragen als auch bidirektionale Signale, die Kabeltelefonsignale, zwischen der Sendeeinheit und den Endstellen. Kabelfernsehsignale und Kabeltelefonsignale werden zwar gleichzeitig, aber in unterschiedlichen Frequenzbereichen übertragen. An die Kabelfernsehsignale wird eine höhere Qualitätsanforderung gestellt, als an die Kabeltelefonsignale. Die Kabeltelefonsignale werden zudem mit einem Modulationsverfahren übertragen, das robuster gegen Störungen ist als das Modulationsverfahren für die Kabelfernsehsignale. Aus diesem Grund ist es möglich in allen Zwischenverstärkern oder nur in einigen die Kabelfernsehsignale verstäkt und die Kabeltelefonsignale unverstärkt weiterzuleiten ohne Qualitätseinbußen bei den Endstellen festzustellen. Ein Zwischenverstärker beinhaltet als aktives Bauelement einen breitbandigen Verstärker. Der Zwischenverstärker aus Fig. 1 hat einen breitbandigen Verstärker AMP, der nur die breitbandigen Kabelfernsehsignale verstärkt. Er benötigt daher eine geringere Bandbreite als ein üblicher Verstärker, der zusätzlich auch die Kabeltelefonsignale mitverstärken muß. Zudem wird lediglich ein unidirektionaler, breitbandiger Verstärker AMP benötigt und kein bidirektionaler, da die Kabelfernsehsignale nur von der Sendeeinheit zu den Endstellen übertragen werden, nicht aber in umgekehrter Richtung.

Der Zwischenverstärker aus Fig. 1 beinhaltet ein erstes Mittel HP1, LP1, das dem breitbandigen Verstärker AMP vorgeschaltet ist und geeignet ist, die empfangenen schmalbandigen Signale von den empfangenen breitbandigen Signalen frequenzmäßig zu trennen und unter Umgehung des breitbandigen Verstärkers AMP unverstärkt weiterzuleiten.

Das erste Mittel HP1, LP1 ist ferner geeignet, eine zeitunabhängige frequenzmäßige Aufteilung der empfangenen Frequenzmultiplexsignale in breitbandige Signale, hier Kabelfernsehsignale, und schmalbandige Signale, hier Kabeltelefonsignale, durchzuführen.

Die schmalbandigen Kabeltelefonsignale werden somit sowohl in Richtung von der Sendeeinheit zu den Endstellen als auch in umgekehrter Richtung von den Endstellen zur Sendeeinheit am breitbandigen Verstärker AMP vorbeigeleitet. Ein Grund für diese Maßnahme ist, daß bei einem Ausfall oder einer Störung im breitbandigen Verstärker AMP dennoch eine Telefonverbindung aufrechterhalten und neue aufgebaut werden können sollen. Die Übertragung der Kabelfernsehsignale im Zwischenverstärker ist unabhängig von der Übertragung der Kabeltelefonsignale und wie weiter unten gezeigt wird, ist die Übertragung der Kabeltelefonsignale nur von passiven Komponenten beeinflußt, die ohne eine Stromversorgung arbeiten.

Der Zwischenverstärker aus Fig. 1 beinhaltet des weiteren ein zweites Mittel zur frequenzmäßigen Zusammenführung der verstärkten breitbandigen Signale und der schmalbandigen Signale. Dieses Mittel ist im einfachsten Fall ein Zusammenschluß zweier Koaxialkabel.

Das erste Mittel HP1, LP1 enthält ein erstes passives Hochpaßfilter HP1, das geeignet ist, die von der Sendeeinheit empfangenen breitbandigen Signale weiterzuleiten und die Weiterleitung der von der Sendeeinheit empfangenen schmalbandigen Signale zu unterbinden. Die breitbandigen Kabelfernsehsignale werden in einem Frequenzbereich übertragen, dessen Frequenzen höher sind als diejenigen des Frequenzbereichs, in dem die schmalbandigen Kabeltelefonsignale übertragen werden. So werden die Kabeltelefonsignale von den Endstellen zur Sendeeinheit beispielsweise im Frequenzbereich von 30 MHz bis 60 MHz übertragen, die Kabeltelefonsignale von der Sendeeinheit zu den Endstellen beispielsweise im Frequenzbereich von 70 MHz bis 100 MHz und die Kabelfernsehsignale im Frequenzbereich von 300 MHz bis 800 MHz.

Die Grenzfrequenz des Hochpaßfilters ist dann im Bereich größer 100 MHz und kleiner 300 MHz zu wählen.

Das erste Mittel HP1, LP1 enthält des weiteren ein erstes passives Tiefpaßfilter LP1, das geeignet ist, die empfangenen schmalbandigen Signale weiterzuleiten und die Weiterleitung der empfangenen breitbandigen Signale zu unterbinden. Mit obigem Zahlenbeispiel ist die Grenzfrequenz des Tiefpaßfilters LP1 ebenfalls dann im Bereich größer 100 MHz und kleiner 300 MHz zu wählen, allerdings mit der Einschränkung, daß sie zusätzlich noch unter der Grenzfrequenz des Hochpaßfilters liegen sollte, damit bei der späteren Zusammenführung der verstärkten Kabelfernsehsignale und der unverstärkten Kabeltelefonsignale kein unnötiges Rauschen durch die Überlagerung von sich überschneidenden Frequenzanteilen entsteht.

Das erste passive Hochpaßfilter HP1 und der breitbandige Verstärker AMP sind in einer Reihenschaltung angeordnet. Das erste passive Tiefpaßfilter LP1 ist parallel zur Reihenschaltung aus erstem passiven Hochpaßfilter HP1 und breitbandigem Verstärker AMP angeordnet. Somit werden die empfangenen breitbandigen Signale verstärkt und die empfangenen schmalbandigen Signale unverstärkt weitergeleitet. Der Signalfluß der breitbandigen Kabelfernsehsignale und der schmalbandigen Kabeltelefonsignale ist demnach der folgende :

Von der Sendeeinheit aus werden Kabelfernsehsignale und Kabeltelefonsignale zum Zwischenverstärker aus Fig. 1 übertragen. Beide Signale werden dem ersten Mittel HP1, LP1 zugeführt. Das Hochpaßfilter HP1 leitet nur die Kabelfernsehsignale weiter, das Tiefpaßfilter LP1 nur die Kabeltelefonsignale. Die Kabelfernsehsignale werden im nachgeschalteten breitbandigen Verstärker AMP verstärkt und anschließend dem zweiten Mittel zugeführt. Die Kabeltelefonsignale werden dem zweiten Mittel direkt, ohne Verstärkung über eine Koaxialkabelleitung zugeführt. Im zweiten Mittel werden die verstärkten Kabelfernsehsignale und die unverstärkten Kabeltelefonsignale überlagert und anschließend zusammen dem Ausgang des Zwischenverstärkers zugeführt, von wo aus sie zu den Endstellen weitergeleitet werden.

Kabeltelefonsignale, die von den Endstellen herrühren und zur Sendeeinheit übertragen werden sollen, gelangen über den Ausgang des Zwischenverstärkers, über das zweite Mittel und das passive Tiefpaßfilter LP1, das bidirektional aktiv ist und in beide Richtungen dieselbe Filtercharakteristik aufweist, zum Eingang des Zwischenverstärkers, von wo aus die Kabeltelefonsignale weiter zur Sendeeinheit weitergeleitet werden.

Das zweite Ausführungsbeispiel wird nun unter Zuhilfenahme von Fig. 2 erläutert. Fig. 2 zeigt einen Zwischenverstärker, der seinem Aufbau und seiner Funktionsweise dem zu Fig. 1 beschriebenen Zwischenverstärker gleicht, mit dem Unterschied, das das zweite Mittel anders ausgebildet ist.

Das zweite Mittel HP2, LP2 enthält nun ein zweites passives Hochpaßfilter HP2, das geeignet ist, breitbandige Signale weiterzuleiten und die Weiterleitung schmalbandiger Signale zu unterbinden. Das zweite passive Hochpaßfilter HP2 ist dem breitbandigen Verstärker AMP nachgeschaltet. Das zweite Hochpaßfilter HP2 weist dieselbe Filtercharakteristik auf, wie das erste Hochpaßfilter HP1. Es dient dazu, zu verhindern, daß die Kabeltelefonsignale, die von den Endstellen ausgesendet wurden, die Kabeltelefonsignale, die vom ersten Mittel weitergeleitet wurden, und eventuelle niederfrequente Störungen zum Ausgang des breitbandigen Verstärkers AMP gelangen.

Das zweite Mittel HP2, LP2 enthält nun ferner ein zweites passives Tiefpaßfilter LP2, das geeignet ist, schmalbandige Signale weiterzuleiten und die Weiterleitung breitbandiger Signale zu unterbinden, und das dem ersten passiven Tiefpaßfilter LP1 nachgeschaltet ist. Das zweite Tiefpaßfilter LP2 weist dieselbe Filtercharakteristik auf, wie das erste Tiefpaßfilter LP1. Es dient dazu, zu verhindern, daß die verstärkten Kabelfernsehsignale und eventuelle hochfrequente Störungen zum ersten Mittel HP1, LP1 gelangen.

Das dritte Ausführungsbeispiel wird nun unter Zuhilfenahme von Fig. 3 erläutert. Fig. 3 zeigt einen Zwischenverstärker, der seinem Aufbau und seiner Funktionsweise dem zu Fig. 2 beschriebenen Zwischenverstärker gleicht, mit dem Unterschied, das der breitbandige Verstärker AMP anders ausgebildet ist und zusätzlich ein Detektor DET und zwei Schalter S1, S2 vorgesehen sind.

Der breitbandige Verstärker AMP ist nun ein bidirektionaler Verstärker. Er dient dazu, zusätzlich zu den breitbandugen auch die schmalbandigen Signale zu verstärken. Des weiteren kann durch den breitbandigen Verstärker AMP, für den Fall, daß der Verstärker in beide Richtungen breitbandig verstärkt, eine bidirektionale breitbandige Übertragung unterstützt werden. Die breitbandigen Signale werden dann nicht nur wie bisher ausschließlich von der Sendeeinheit zu den Endstellen übertragen, sondern auch umgekehrt. Dazu wird der Frequenzbereich z.B. derart aufgeteilt, daß der Bereich von 300 MHz bis 800 MHz für die Richtung von der Sendeeinheit zu den Endstellen und der Bereich von 100 MHz bis 300 MHz für die Richtung von den Endstellen zur Sendeeinheit reserviert ist. Die Grenzfrequenzen der Hochpaß- und Tiefpaßfilter HP1, HP2, LP1, LP2 werden dann zu 300 MHz gewählt. Die breitbandigen Signale enthalten dann z.B. zusätzlich Bildsignale für Bildtelefonie oder Datensignale für einen breitbandigen Internetzugang.

Die Aufgabe des zweiten Mittels HP2, LP2 ist es, die von den Endstellen empfangenen breitbandigen und schmalbandigen Signale dem breitbandigen, bidirektionalen Verstärker AMP zuzuführen.

Für die breitbandigen Signale sind anstelle der oder zusätzlich zu den Kabelfernsehsignale auch Videosignale übertragbar, z.B. zugehörig einem Video-auf-Anfrage System. Für die bidirektionalen Signale sind anstelle der oder zusätzlich zu den Sprachsignale auch Datensignale übertragbar, z.B. für Datenkommunikation zwischen vernetzten Computern.

Das erste Mittel HP1, LP1, S1 beinhaltet zusätzlich noch einen Schalter S1. Das zweite Mittel HP1, LP1, S2 beinhaltet zusätzlich noch einen Schalter S2. Der Detektor DET überwacht die verstärkenden Elemente des Verstärkers AMP und steuert die Schalter S1 und S2 in Abhängigkeit vom Ergebnis der Überwachungen an. Die beiden Schalter S1 und S2 haben jeweils zwei Stellungen und sind derart verschaltet, daß sie in der einen Stellung eine Signalverbindung über die Hoch-/Tiefpaßfilter LP1, HP1, den Verstärker AMP und die Hoch-/Tiefpaßfilter LP2, HP2 freischalten und in der anderen Stellung eine direkte Verbindung zwischen den Schaltern S1 und S2 freischalten. Ist beispielsweise der Signalpegel des einen Ausgangs des Verstärkers AMP unterhalb einrr vorgegebenen Schwelle, z.B. aufgrund eines Stromausfalls, so wird dies vom Detektor DET detektiert, woraufhin die Schalter S1 und S2 derart angesteuert werden, daß die direkte Verbindung zwischen den beiden Schaltern S1 und S2 freigeschalten wird, um zumindest eine unverstärkte Weiterleitung der Signale zu bewirken. Fällt der Dtektor aus, so schalten die Schalter S1 und S2 automatisch die direkte Verbindung frei, vergleichbar einem Relais.

Das vierte Ausführungsbeispiel wird nun unter Zuhilfenahme von Fig. 4 erläutert. Fig. 4 zeigt einen Zwischenverstärker für ein Kommunikationsnetz, wie zu Fig. 3 beschrieben, mit dem Unterschied, daß zwei Detektoren DET1, DET2 vorgesehen sind und anstelle der Schalter S1 und S2 zwei 2x2 Matrizen MAX1, MAX2 vorgesehen sind. Jeder Detektor DET1, DET2 überwacht einen Ausgang des Verstärkers AMP und steuert beide 2x2 Matrizen MAX1, MAX2. Jede Matrix MAX1, MAX2 ist derart ausgestaltet, daß jeder Eingang mit jedem Ausgang verschaltbar ist. Es sind nun drei Signalpfade vorgesehen. Der erste Signalpfad ist für die Übertragung der breit- und schmalbandigen Signale von der Sendeeinheit zu den Endstellen vorgesehen. Der zweite Signalpfad ist für die Übertragung der breit- und schmalbandigen Signale von den Endstellen zur Sendeeinheit vorgesehen. Der dritte Signalpfad ist vorgesehen, um im Falle einer Störung im ersten und/oder zweiten Signalpfad die breit- und schmalbandigen Signale des jeweiligen gestörten Signalpfades oder beider Signalpfade über einen alternativen Weg übertragen zu können. Wird beispielsweise vom Detektor DET1 eine Störung im ersten Signalpfad detektiert, so werden die Matrizen MAX1, MAX2 derart angesteuert, daß die breit- und schmalbandigen Signale von der Sendeeinheit zu den Endstellen über den altenativen dritten Signalpfad umgeleitet und unverstärkt weitergeleitet werden. Ist die Störung behoben, was vom Detektor DET1 detektiert wird, so kann der erste Signalpfad wieder freigeschaltet werden. Vergleichbares gilt für eine im zweiten Signalpfad vom Detektor DET2 detektierten Störung. Die Ansteuerung der Matrizen MAX1, MAX2 erfolgt z.B. bezüglich des dritten Signalpfads über eine ODER-Verknüpfung der Ausgänge der Detektoren DET1, DET2.

Das fünfte Ausführungsbeispiel wird nun unter Zuhilfenahme von Fig. 5 erläutert. Fig. 5 zeigt einen Zwischenverstärker, der seinem Aufbau und seiner Funktionsweise dem zu Fig. 4 beschriebenen Zwischenverstärker gleicht, mit dem Unterschied, das zusätzlich zwei Matrizen MAX3, MAX4 vorgesehen sind.

Die Matrizen MAX3, MAX4, die im einfachsten Fall auch als Schalter, vergleichbar den Schaltern aus Fig. 3 ausgebildet sind, haben die Aufgabe, die Koppler zum Zusammenführen der Signalpfade zu ersetzen, da mittels geschalteter Verbindungen geringere Störeinflüsse gegenüber gekoppelten Verbindungen auftreten. Die Matrizen MAX3, MAX4 werden von den Detektoren DET1, DET2 angesteuert.

Das sechste Ausführungsbeispiel wird nun unter Zuhilfenahme von Fig. 6 erläutert. Fig. 6 zeigt einen Zwischenverstärker für ein Kommunikationsnetz, wie zu Fig. 1 beschrieben, mit einem breitbandigen Verstärker AMP, einem ersten Mittel C1 und einem zweiten Mittel C2.

Das Kommunikationsnetz kann auch zumindest teilweise für eine optische Übertragung von optischen Frequenzmultiplexsignalen ausgelegt sein. Dann sind optische Zwischenverstärker über optische Leitungen, z.B. optische Glasfaserleitungen, miteinander verbunden. Ein optischer Zwischenverstärker beinhaltet einen optischen, breitbandigen Verstärker AMP, z.B. einen mit Erbium dotierten optischen Faserverstärker. Die optischen Frequenzmultiplexsignale setzen sich beispielsweise aus zwei Signalen zusammen, einem breitbandigen und einem schmalbandigen, die bei unterschiedlichen Wellenlängen übertragen werden, z.B. das Breitbandige bei 1520nm und das Schmalbandige bei 1330nm.

Das erste Mittel C1 dient dazu, die beiden Signale zu trennen. Es beinhaltet einen optischen Koppler C1, der ein wellenlängenabhängiger Koppler ist. Das breitbandige und das schmalbandige Signal werden dadurch in zwei unterschiedliche Signalpfade geleitet. In dem einen Signalpfad befindet sich der optische, breitbandige Verstärker AMP, der das breitbandige Signal verstärkt. In dem anderen Signalpfad ist lediglich eine optische Leitung vorgesehen, die das schmalbandige Signal unverstärkt weiterleitet.

Mittels eines zweiten Mittel C2, das einen zweiten optischen Koppler C2 beinhaltet, der baugleich zum ersten optischen Koppler ausgeführt ist, können die beiden Signalpfade miteinander verschmolzen werden, so daß das breitbandige Signal verstärkt zusammen mit dem unverstärkten schmalbandigen Signal zu den Endstellen übertragen wird. Zusätzlich kann ohne bauliche Veränderung, beipielsweise unter Verwendung einer dritten Wellenlänge eine Übertragung von den Endstellen erfolgen. Durch geeignete Wahl der optischen Koppler kann die dritte Wellenlänge über den verstärkenden Signalpfad oder über den unverstärkenden Signalpfad geführt werden. Das Verfahren ist auf vergleichbare Weise erweiterbar auf vier und mehr Wellenlängen.

## Patentansprüche

1. Zwischenverstärker für ein Kommunikationsnetz zum Empfang und zur Weiterleitung von Frequenzmultiplexsignalen aus breitbandigen Signalen und schmalbandigen Signalen, mit einem breitbandigen Verstärker ( AMP ) zur Verstärkung der empfangenen breitbandigen Signale und zur anschließenden Weiterleitung der verstärkten breitbandigen Signale, **dadurch gekennzeichnet**,
daß ein erstes Mittel ( HP1, LP1; C1; S1; MAX1 ) vorgesehen ist, das dem breitbandigen Verstärker ( AMP ) vorgeschaltet ist und geeignet ist, die empfangenen schmalbandigen Signale unter Umgehung des breitbandigen Verstärkers ( AMP ) unverstärkt weiterzuleiten.

2. Zwischenverstärker nach Anspruch 1, dadurch gekennzeichnet, daß das erste Mittel ( HP1, LP1; C1 ) geeignet ist, die empfangenen schmalbandigen Signale von den empfangenen breitbandigen Signalen frequenzmäßig zu trennen.

3. Zwischenverstärker nach Anspruch 1 oder 2, dadurch gekennzeichnet, daß das erste Mittel ( HP1, LP1; C1 ) geeignet ist, eine frequenzmäßige Aufteilung der empfangenen Frequenzmultiplexsignale in breitbandige Signale und schmalbandige Signale durchzuführen, und daß ein zweites Mittel ( HP2, LP2; C2 ) zur frequenzmäßigen Zusammenführung der verstärkten breitbandigen Signale und der schmalbandigen Signale enthalten sind.

4. Zwischenverstärker nach Anspruch 3, dadurch gekennzeichnet, daß das erste Mittel ( HP1, LP1; C1 ) ein erstes passives Hochpaßfilter ( HP1 ) enthält, das geeignet ist, die empfangenen breitbandigen Signale weiterzuleiten und die Weiterleitung der empfangenen schmalbandigen Signale zu unterbinden, und daß das erste Mittel ( HP1, LP1; C1 ) ein erstes passives Tiefpaßfilter ( LP1 ) enthält, das geeignet ist, die empfangenen schmalbandigen Signale weiterzuleiten und die Weiterleitung der empfangenen breitbandigen Signale zu unterbinden.

5. Zwischenverstärker nach den Ansprüchen 4, dadurch gekennzeichnet, daß das erste passive Hochpaßfilter ( HP1 ) und der breitbandige Verstärker ( AMP ) in einer Reihenschaltung angeordnet sind, und daß das erste passive Tiefpaßfilter ( LP1 ) parallel zur Reihenschaltung aus erstem passiven Hochpaßfilter ( HP1 ) und breitbandigem Verstärker ( AMP ) angeordnet ist, um die empfangenen breitbandigen Signale verstärkt und die empfangenen schmalbandigen Signale unverstärkt weiterzuleiten.

6. Zwischenverstärker nach Anspruch 5, dadurch gekennzeichnet, daß das zweite Mittel ( HP2, LP2 ) ein zweites passives Hochpaßfilter ( HP2 ) enthält, das geeignet ist, breitbandige Signale weiterzuleiten und die Weiterleitung schmalbandiger Signale zu unterbinden, und daß das zweite passive Hochpaßfilter ( HP2 ) dem breitbandigen Verstärker ( AMP ) nachgeschaltet ist, und daß das zweite Mittel ( HP2, LP2 ) ein zweites passives Tiefpaßfilter ( LP2 ) enthält, das geeignet ist, schmalbandige Signale weiterzuleiten und die Weiterleitung breitbandiger Signale zu unterbinden, und daß das zweite passive Tiefpaßfilter ( LP2 ) dem ersten passiven Tiefpaßfilter ( LP1 ) nachgeschaltet ist.

7. Zwischenverstärker nach einem der vorhergehenden Ansprüche, dadurch gekennzeichnet, daß die breitbandigen Signale Verteilsignale und die schmalbandigen Signale bidirektionalen Signale enthalten, und daß der breitbandige Verstärker ( AMP ) ein unidirektionaler Verstärker ist.

8. Zwischenverstärker nach Anspruch 6, dadurch gekennzeichnet, daß die Verteilsignale Kabelfernsehsignale und/oder Videosignale enthalten, und daß die bidirektionalen Signale Sprachsignale und/oder Datensignale enthalten.

9. Zwischenverstärker nach Anspruch 1, dadurch gekennzeichnet, daß ein zweites Mittel ( S2; MAX2 ) vorgesehen ist, das dem breitbandigen Verstärker ( AMP ) nachgeschaltet ist und mit dem ersten Mittel ( HP1, LP1; C1; S1; MAX1 ) derart zusammenwirkt, daß mindestens zwischen zwei unterschiedlichen Signalpfaden hin- und hergeschaltet werden kann, wobei in den einen Signalpfad der breitbandigen Verstärker ( AMP ) eingeschleift ist.

10. Zwischenverstärker nach Anspruch 9, dadurch gekennzeichnet, daß das erste Mittel ( HP1, LP1; C1; S1; MAX1 ) einen ersten Schalter ( S1 ) beinhaltet, der derart ausgestaltet ist, daß bei Anliegen einer Stromversorgung am Zwischenverstärker die empfangenen Frequenzmultiplexsignale auf den den breitbandigen Verstärker ( AMP ) beinhaltenden Signalpfad und bei Ausfall der Stromversorgung automatisch auf einen anderen Signalpfad gelegt werden.

11. Zwischenverstärker nach Anspruch 9 oder 10, dadurch gekennzeichnet, daß ein Detektor ( DET ) vorgesehen ist, um zumindest ein Ausgangssignal des breitbandigen Verstärkers ( AMP ) zu überwachen, und daß der Detektor ( DET ) geeignet ist, bei einer detektierten Betriebsstörung des breitbandigen Verstärkers ( AMP ) ein Steuersignal an den ersten Schalter ( S1 ) zu geben, um diesen zu veranlassen die empfangenen Frequenzmultiplexsignale auf einen Signalpfad zu legen, der den breitbandigen Verstärker ( AMP ) nicht beinhaltet.

12. Zwischenverstärker nach einem der Ansprüche 9 bis 11, dadurch gekennzeichnet, daß der breitbandige Verstärker ( AMP ) ein bidirektionaler Verstärker ist, daß die breitbandigen Signale bidirektionale Videosignale und/oder Datensignale enthalten, und daß die schmalbandigen Signale bidirektionale Sprachsignale und/oder Datensignale enthalten.

13. Zwischenverstärker nach Anspruch 1,2 oder 3, dadurch gekennzeichnet, daß der breitbandige Verstärker ( AMP ) ein optischer Verstärker ist, und daß das erste Mittel ( C1 ) einen ersten optischen Koppler ( C1 ) enthält, der geeignet ist, die empfangenen breitbandigen Signale und die empfangenen schmalbandigen Signale in zwei unterschiedliche optische Signalpfade weiterzuleiten.

14. Zwischenverstärker nach Anspruch 13, dadurch gekennzeichnet, daß das zweite Mittel ( C2) einen zweiten optischen Koppler ( C2 ) enthält, der derart mit dem ersten optischen Koppler ( C1 ) verschaltet ist, daß zwei Signalpfade zur Verfügung gestellt werden, wobei sich in dem einen Signalpfad der breitbandige, optische Verstärker ( AMP ) und in dem anderen Signalpfad eine optische Leitung befindet.
